# EUROPEAN PATENT SPECIFICATION

(11) **EP 1 956 753 B1**
(45) Date of publication and mention of the grant of the patent: **13.07.2016**
(21) Application number: 07254845.6
(22) Date of filing: 12.12.2007
(51) Int. Cl.: H04L 12/26, H04L 12/24

(54) **Network monitoring system**
Netzwerküberwachungssystem
Système de surveillance de réseau

(30) Priority: 06.02.2007 US 702669
(43) Date of publication of application: 13.08.2008
(73) Proprietor: BRITISH TELECOMMUNICATIONS public limited company, London EC1A 7AJ (GB)
(72) Inventor: McCallum, David, Herts, AL 7 2PT (GB)
(74) Representative: Lidbetter, Timothy Guy Edwin

(56) References cited:
- EP-A- 0 716 525
- EP-A- 0 948 165
- WO-A-97/45801
- US-A1- 2005 123 027
- YUMING JIANG ET AL: "Providing Quality of Service Monitoring: Challenges and Approaches" IEEE, 10 April 2000 (2000-04-10), pages 115-128, XP010376678

## Description

The present invention relates to the monitoring of traffic flow performance of a communications connection. For some applications, the flow performance of traffic over a connection can be very significant. Although simple data rate is important, for some applications, latency and jitter are also significant.

Latency is the delay in transmission of data, and can be the consequence of a number of factors. Amongst these are the delays caused by encoding, decoding and compression of the data, any buffering or other queuing during the transmission process itself and, for a two-way system, the time taken at the remote end to process a query, instruction, etc and generate a response.

Latency is significant in voice systems because conversations take place in real time. It is usually less important in data transmission, but in some applications, where processes are operating almost in real time, latency can be very significant. Examples include the remote operation of machinery, where the operator relies on feedback from the machine's behaviour to control it, and in the financial services industry, where prices of commodities change very rapidly and it is necessary to respond quickly to incoming data. Delays in data can result in decisions being made on information that is no longer current. Even if the information is current when a decision is taken, delays in transmitting instructions based on that decision can result in the information no longer being current when the instructions are received.

Jitter is the variation of latency over time. This is a significant problem in voice systems, where such variation can lead to a noticeable deterioration in perceived quality. Also, in near-real-time data operations, variation in delay may be harder to compensate for than a steady delay.

Existing network monitoring systems tend to have small numbers of centrally based monitoring equipment, each monitoring very large numbers of paths to endpoints. This is relatively easy to configure but constrains performance. Monitoring every link from centrally based monitoring equipment would require a large overhead in data capture.

It would therefore be useful to be able to monitor and report the delays, and the variability in the delays, associated with individual information feeds. In particular, in the financial services industry, it would be desirable to provide information on the performance of automated trading systems, such as timeliness of a market feed, speed of trades, etc. in order to facilitate trading decisions, and to determine which of several possible feeds is currently supplying the most up to date information.

It is known, from European Patent application EP0716525, International patent application WO97/45801 and US patent application US 2005/0123027 to provide a system which generates an output generated from data collected at a number of remote terminals, the terminals being selected according to he output required. However, the data collection process is inefficient because data is colleted by the remote terminals, whether it is currently required as an input to any of the currently required outputs.

The present invention provides a monitoring system for a telecommunications network interconnecting a plurality of network terminations, the monitoring system comprising a server having:
data retrieval means for receiving data from the network terminations;
data processing means for processing the data received from the network terminations to generate an output,
a data storage means adapted to store data relating to the arrangement of the network and the network terminations.
characterised by configuration means adapted to identify, from the network data store, the network terminations at which data collection is necessary to generate a required output
the configuration means being adapted to control the data retrieval means and data processing means to perform the collection of the required data.

The invention also provides a method of monitoring a telecommunications network interconnecting a plurality of network terminations, the method comprising the steps of:
configuring a data processing means to process data received from the network terminations to generate required output data, the configuration process being controlled in accordance with stored data relating to the arrangement of the network and the network terminations from which data is to be collected to generate a required output;
receiving data from the network terminations in response to said instructions;
and disseminating the required output data,
characterised in that the configuration process controls the network terminations , to collect the required data by generating instructions and transmitting the instructions so generated to those network terminations identified as necessary to provide the data to generate a required output

By consolidating the collection of the data requirements, and co-ordinating them using the store of network architecture, the data collection process can be made more efficient by allowing data required for more than one requirement to only be collected once, whilst data not currently required to meet any of the requirements does not need collection. This reduces the signalling overhead in the network.

The outputs may be generated by the monitoring system autonomously e.g. at regular intervals, or it may respond to events received from the network elements for the delivery for such outputs. This ensures that data is only collected when there is a current requirement for it.

The monitoring system may include dissemination means for distributing the monitoring outputs to a plurality of receiving stations in accordance with instructions generated by the configuration means.

Preferably the storage means is associated with input means for receiving data from the network relating to the architecture of the network.

The data processing means may comprise means to respond to events reported by the network terminations for the generation of outputs from the data.

The configuration means may be arranged to generate authorisation data for storage in the data storage means, the data processing means being controlled by the authorisation data such that the generation of data is restricted to that required for authorised outputs, so that unnecessary data collection is avoided

The configuration means may also comprise instruction generation means for generating instructions to be transmitted to the network terminations to perform data collection operations.

The instruction generation means may be arranged to generate commands to cause a first network element to generate a signal for transmission to a second network element, and for the second network element to report to the server the time the signal is received. Alternatively, the first network element may be instructed to cause the second network element to transmit a return signal, the first element then reporting to the server the time of receipt of the reply.

The data store may maintain user installation data, network data and user identification and authorisation data, having associated administration means for maintaining the data in the data store. This administration means may identify associations between users, network data and user credentials, for the control of configuration of network monitoring, data processing, and data dissemination

In embodiments configured for the financial services industry, the measurement may take measurements of the latency in market data information - that is to say, the time taken for changes in prices to be made available. It may also provide indications of transaction times - how quickly a dealer responds to a request to buy or sell stock. Both these factors are crucial to that industry, where rapid changes in prices require equally rapid responses. This requires highly granular measurement (sub-millisecond network latency) and very frequent reporting of measurements (typically every second).

The use of a configuration having monitoring equipment at every network termination, in conjunction with the application of measurements only across those paths where required allows an improvement over prior art systems in the frequency and accuracy of measurements, and the rate at which measurement data can be collected and disseminated.

An embodiment of the invention will now be described, by way of example, with reference to the drawings, in which
Figure 1 is a schematic representation of a simple data network to which the invention has been applied
Figure 2 is a schematic representation of a performance monitoring system for the data network of Figure 1, operating according to the invention
Figure 3 is a schematic representation of the functions performed by the central instrumentation server of the performance monitoring system depicted in Figure 2
Figure 4 is a schematic representation of the functions performed by the provisioning server of the central information server depicted in Figure 3

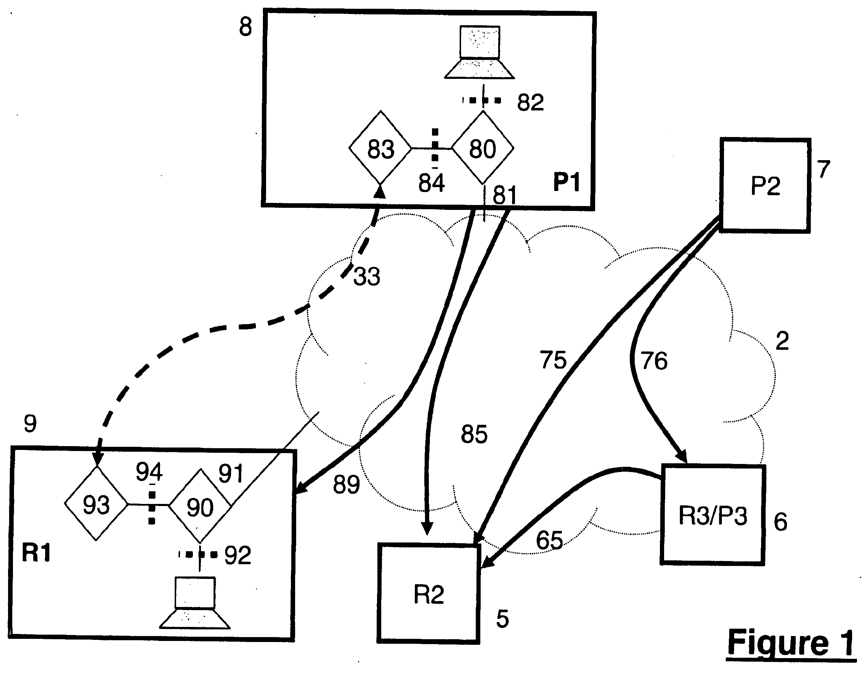

Referring firstly to Figure 1, the users of the network are collectively referred to herein as customers of the network operator. There are two categories of customer, namely information providers P (6, 7, 8), and information receivers (R) 5, 6, 9. It will be noted that a customer may belong to both categories, as in the example of customer P3/R3 (6).

Each information receiver (5, 6, 9) subscribes to data feeds provided by one or more of the information providers 6, 7, 8. In this example, receiver 9 subscribes to the service from provider 8 (feed 89), receiver 6 subscribes to the service from provider 7 (feed 76), and receiver 5 subscribes to the services from providers 6, 7, and 8 (feeds 65, 75, 85).

The network depicted herein is a secure private network 2 running under the Internet Protocol used by the public Internet and private "Intranets", but with limited access to pre-authorised organisations (a so-called "extranet"). The network may be implemented as an Ethernet network, with an underlying optical network and minimum store-and-forward components. As shown for sites P1 and R1, each site provides a local area network 8, 9 connected to a respective router 80, 90 (for example Cisco 7300). The routers 80, 90 connect via a physical fibre path 81, 91 to a central switch (not shown) allowing interconnection between the various customers over the virtual network 2.

Typically, the routers 80, 90; fibre connections 81, 91; and central switch are all duplicated to provide resilience in the virtual network 2.

At the interfaces 82, 92 between the customer equipment 80, 90 and the network operator's equipment, provision is made for a firewall, both to protect the customers' data from each other and to protect the integrity of the network operator's equipment.

The extranet 2 offers its users high-bandwidth, low-latency network connections, superior to those available on the public internet. The present invention is concerned with allowing the users to monitor this performance, to determine that these properties are indeed being delivered. A user may subscribe to more than one extranet, and the invention allows such users to compare the performances of the different connections, and select the connection currently giving the optimum performance for the user's current needs.

As shown for customers P1 and R1, each customer site has an associated shadow router 83, 93. This router is part of the service provider's equipment, and is maintained through a separate interface 84, 94 that emulates the customer interface 82, 92. The shadow routers 83, 93 are configured to transmit probe messages 33 to each other, and to measure characteristics of the probes. Typically such characteristics will include successful/unsuccessful message delivery, availability, and round trip delay, the latter being measured either as a round-trip measure, or a one-way time by comparison with a standard clock. For round trip times, the shadow routers 83, 93 are designed to include the transit times of the corresponding customer routers 80, 90. Because the shadow routers are topologically close to the customer routers which they are emulating, the traffic density and other network characteristics are similar. These probes 33 allow latency and jitter to be measured on the virtual links between the routers. The jitter probes are configured to send small packets periodically, and data is collected regarding the round trip delays and the jitter of the packet streams.

The use of shadow routers on a separate interface 84, 94 allows the network operator to maintain control of them, and avoids any inconsistencies that might be caused by reconfiguration of the user equipment 80, 90. There are several advantages to using a shadow router. Firstly, they have no production traffic to affect, or to be affected by, any other features or loads imposed on them. They can be updated with new probes without touching the live router 80, 90, and it can be configured independently of the live routers, which may differ from one user location to another because of customer preference or the age of the installation.

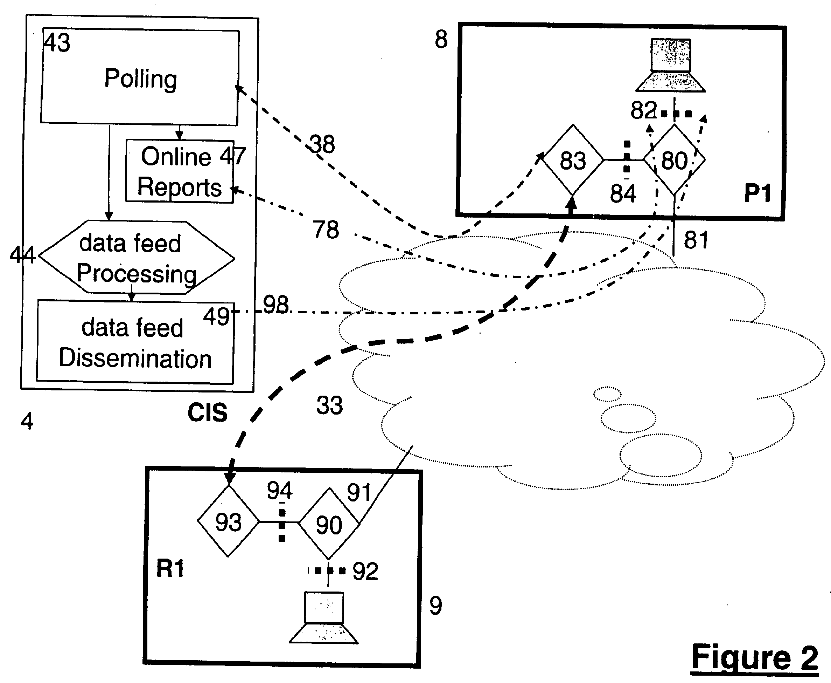

The performance of the network depicted in Figure 1 is monitored by a data acquisition and dissemination service carried over the network, as depicted in Figure 2. For clarity, only two customers, 8, 9, are depicted. Each user 8 is provided with a respective data connection 78/98; to a Central Instrumentation Server (CIS) 4. Similar connections are provided for other users (9) but are omitted from the Figure for clarity. The central instrumentation server 4 is customer-facing, so firewalls are placed between the Point of Presence equipment and the CIS, with access controlled on an application/ip address basis. Authentication credentials are needed for customers to log in to view reports.

The Central Instrumentation Server 4 has a data collection (polling) function 43, a data feed processing function 44 and a data feed dissemination function 49. In co-operation with the polling function 43, each shadow server 83 collects performance data from the responses to the probes 33 etc, and transmits messages 38 to the Central Instrumentation Server 4, in response to polling requests generated by the central instrumentation server. The data processor 44 in the central instrumentation server 4 processes this data which is then converted by the data feed dissemination function 49 into an individual output 98 which is transmitted to the respective customer terminal 8. In this embodiment such information is provided as a presentation to the customer application in which data continuously updates, analogous to a "ticker" format in which data text scrolls continuously across a display screen. However, other formats for the continuous presentation of data may be used, such as graphical (analogue) displays. Each user 8, can also access online reports through a connection 78.

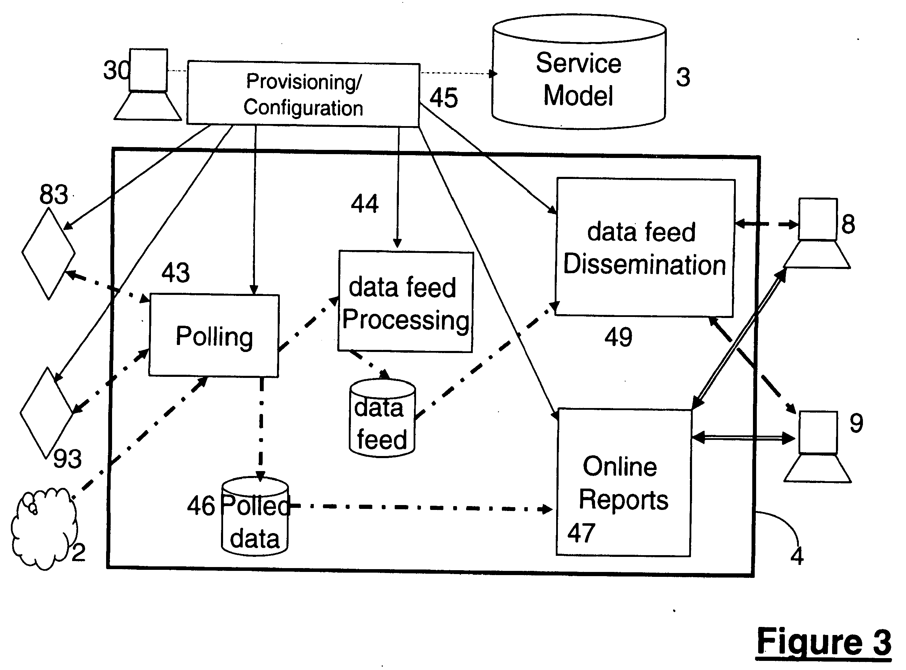

The Central Instrumentation Server (CIS) 4 is shown in more detail in Figure 3. It can provide functionality dedicated to the network in the form of highly granular data, to provide reports to customers on network performance either continuously (for example as a customer "ticker" display), or in response to a predetermined condition such as a performance measure falling below a threshold value, or in response to a request from the user (e.g. through an online report).

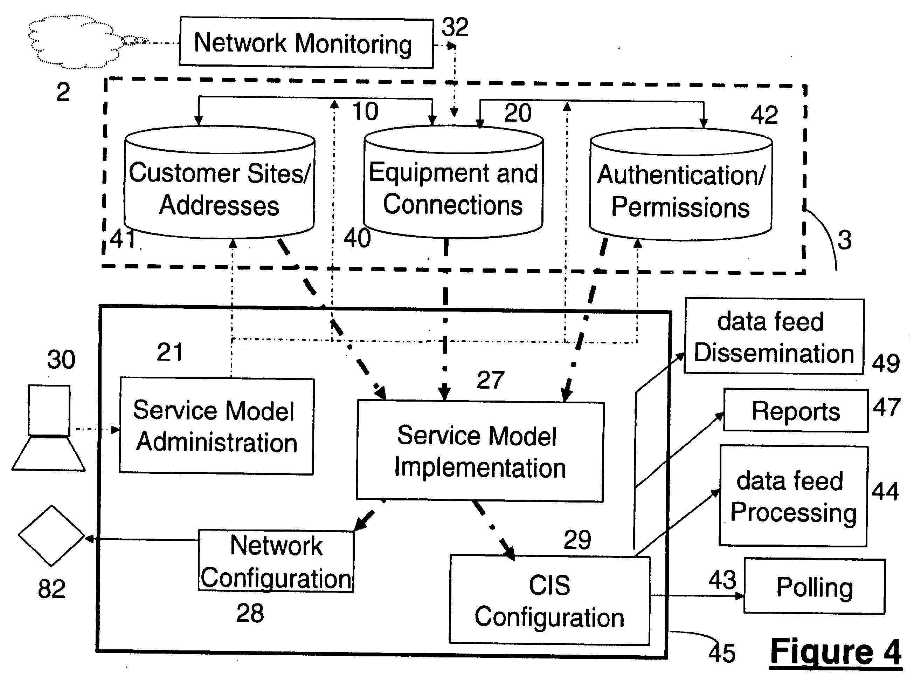

The Central Instrumentation Server (CIS) 4 is controlled by a provisioning/configuration function 45 operating in co-operation with a service model 3, and shown in more detail in Figure 4. The service model 3 comprises three main areas of information. Firstly, there is an infrastructure database 40, containing data relating to the equipment and connections making up the network 2; this information is discovered automatically through network monitoring systems 32 that monitor and retrieve network equipment configuration data. Secondly, a customer database 41 containing information such as customer identifiers, customer sites, and addresses; this information is generated by a service model administration function 21 from data entered through a supervisory function 30. Thirdly, there is authentication data 42, containing identification and password information that allow a user to log in to the data dissemination application 49 or online reporting application (47); this information is also generated by the service model administration function 21 from data entered through the supervisory function 30. Some of the values within this data, such as passwords etc, may be specified by the customers 83.

The supervisory function 30 is also used to identify and record associations 10 between the customer site/address information 41 and the network equipment and connections information 40, and associations 20 between the authentications/permissions 42 and the network equipment and connections information 40. This is also performed through the service model administration function 21.

The data 40, 41, 42 and data relationships 10, 20 that form the service model 3 are used by the configuration function 45 to provide measurement and reporting of the customer services. A central processor 27 uses data from the service model 3 to generate instructions to be performed by respective configuration servers 28, 29 for network elements such as the shadow routers 83, and for the Central Instrumentation Server 4.

The network configuration server 28 generates initial or updated configuration instructions to the shadow routers 83, 93 located at each customer site to cause them to measure network performance by generating probes 33 to monitor the performance of individual links between the shadow routers, and to periodically collect instrumented data and application metrics, and data relating to events and alerts.

The configuration processor 29 for the central server 4 configures aspects of the polling function 43, the data feed processing function 44, and the data feed dissemination function 49.

The polling function 43 transmits requests to the shadow routers 83, 93 to upload the data they have collected.. Such requests may be made for each individual piece of information, or the request may specify the conditions upon which to upload data: for example in response to changes in the data values observed by the shadow router.

The polling function 43 creates data 46 in a format suitable for retrieval by users 8, 9 through online reports generated by a report server 47, also configured by the configuration processor 29. Such reports are delivered in response requests from users, subject to data 42 relating to user authentication and permissions. The polling function 43 additionally provides data to a data feed processing function 44. The data feed processing function 44 processes this data to generate a set of data 48 indicative of the current state of the network, and of individual components and links in the network, according to the data requirements specified in the service model 3. For this purpose, the data collected by the polling server 43 may be combined with other data collected by other means directly from the network 2, for example detecting routing failures, overall loadings etc, to provide input data for the data feed dissemination process 49.

User systems 8, 9 initiate a session with the data feed dissemination process 49 which transmits messages to the user at regular intervals. The user sessions are authenticated according to user credentials (e.g. userid and password) that are stored in the authentications/permissions area 42 of the service model 3. The information that is sent to any one user is determined through reference to information derived from the service model 3, including equipment and connections area 40, the linkages 20 to authentications/permissions area, and the linkages 10 to the customer site/address area 41.

## Claims

1. A monitoring system for a telecommunications network interconnecting a plurality of network terminations, the monitoring system comprising a server (4) having:
data retrieval means (43) for receiving data from the network terminations;
data processing means (44) for processing the data received from the network terminations to generate an output,
a data storage means (3, 40) adapted to store data relating to the arrangement of the network and the network terminations,
and **characterised by** configuration means (45) adapted to identify, from the network data store (3), the network terminations at which data collection is necessary to generate a required output,
the configuration means being adapted to control the data retrieval means (43) and data processing means (45) to perform the collection of the required data in controlling the network terminations (83,93) to collect the required data by generating instructions and transmitting the instructions so generated to those network terminations identified as necessary to provide the data to generate a required output.

2. A monitoring system according to claim 1, further comprising dissemination means (49) adapted to distribute the monitoring outputs to a plurality of receiving stations in accordance with instructions generated by the configuration means.

3. A monitoring system according to claim 1 or claim 2 wherein the storage means is associated with input means for receiving data from the network relating to the architecture of the network.

4. A monitoring system according to any preceding claim, wherein the data processing means (44) comprises means to respond to events reported by the network terminations for the generation of outputs from the data.

5. A monitoring system according to any preceding claim, wherein the configuration means (45) generates authorisation data for storage (42) In the data storage means (3), and the data processing means is controlled by the authorisation data (42) such that the generation of data is restricted to that required for authorised outputs.

6. A monitoring system according to any preceding claim, wherein the configuration means (45) comprises instruction generation means (28) adapted to generate instructions to be transmitted to the network terminations to perform data collection operations.

7. A monitoring system according to claim 6, wherein the instruction generation means (28) is arranged to generate commands to cause a first network element to generate a signal for transmission to a second network element, and for the second network element to report to the server the time the signal is received.

8. A monitoring system according to claim 6, wherein the instruction generation means (28) is arranged to generate commands to cause a first network element to cause the second network element to transmit a return signal, the first element then reporting to the server the time of receipt of the reply.

9. A monitoring system according to any preceding claim, wherein the data store (3) has means adapted to maintain user installation data (41), network data (40) and user identification and authorisation data (42), and administration means (21) adapted to maintain the data in the data store (3)

10. A monitoring system according to claim 9, wherein the administration means (21) is means adapted to identify associations 10,20 between users (41), network data (40) and user credentials (42), for the control of configuration of network monitoring, data processing, and data dissemination

11. A method of monitoring a telecommunications network (2) interconnecting a plurality of network terminations (83, 93), the method comprising the steps of:
configuring a data processing means (44) to process data received from the network terminations to generate required output data, the configuration process being controlled in accordance with stored data (40) relating to the arrangement of the network and the network terminations from which data is to be collected to generate a required output;
receiving data from the network terminations in response to said instructions;
and disseminating the required output data,
**characterised in that** the configuration process controls the network terminations (83, 93) to collect the required data by generating instructions and transmitting the instructions so generated to those network terminations identified as necessary to provide the data to generate a required output

12. A method according to claim 11 wherein individual instances of data collected from a given measuring point (83) are used for the fulfilment of requests made by more than one receiving station (8, 9).

13. A method according to claim 11 or 12, wherein the store (40) of network data receives data from the network (2) relating to the architecture of the network.

14. A method according to claim 13, wherein the outputs are generated in response to events from the network terminations (83, 93).

15. A method according to claim 11, claim 12, claim 13 or claim 14, wherein the provision of data to the network terminations (8, 9) is controlled according to a store (42) of authorisation data such as to restrict the provision of data to the network terminations to that required to generate authorised outputs.

16. A method according to claim 11, claim 12, claim 13, claim 14 or claim 15, wherein the configuration process includes the generation of instructions to be transmitted to the network terminations (83, 93) to perform data collection operations.

17. A method according to claim 16, wherein commands are generated to cause a first network element (8) to generate a signal for transmission to a second network element (9), and for the second network element to report to the data processing means (44) server the time the signal is received.

18. A method according to claim 16, wherein commands are generated to cause a first network element (8) to cause a second network element (9) to transmit a return signal, the first element then reporting the time of receipt of the reply.

19. A method according to any of claims 11 to 18, wherein user installation data, network data, and user identification and authorisation data are stored and maintained under the control of an administration function (21)

20. A method according to claim 19, wherein the administration function (21) identifies associations between users, network data and user credentials, for the control of configuration of network monitoring, data processing, and data dissemination.

## Patentansprüche

1. Überwachungssystem für ein Telekommunikations-Netzwerk, das eine Vielzahl von Netzwerkabschlüssen untereinander verbindet, wobei das Überwachungssystem
einen Server (4) umfasst, der aufweist:
eine Daten-Gewinnungseinrichtung (43) zum Empfangen von Daten von den Netzwerkabschlüssen,
eine Datenverarbeitungseinrichtung (44) zum Verarbeiten der von den Netzwerkabschlüssen empfangenen Daten zur Erzeugung eines Ausgangs,
eine Daten-Speichereinrichtung (3, 40), die dazu eingerichtet ist, Daten zu speichern, die sich auf die Ausgestaltung des Netzwerks und der Netzwerkabschlüsse beziehen,
und **gekennzeichnet ist durch** eine Konfigurations-Einrichtung (45), die dazu eingerichtet ist, aus dem Netzwerk-Datenspeicher (3) die Netzwerkabschlüsse zu identifizieren, bei denen eine Datensammlung zur Erzeugung eines geforderten Ausgangs erforderlich ist,
wobei die Konfigurations-Einrichtung dazu eingerichtet ist, die Daten-Gewinnungseinrichtung (43) und die Datenverarbeitungseinrichtung (45) zu steuern, um die Sammlung der geforderten Daten durchzuführen, indem die Netzwerkabschlüsse (83, 93) so gesteuert werden, dass die geforderten Daten gesammelt werden **durch** Erzeugen von Anweisungen und Übermitteln der so erzeugten Anweisungen an diejenigen Netzwerkabschlüsse, die als für die Lieferung der Daten zur Erzeugung eines geforderten Ausgangs erforderlich identifiziert werden.

2. Überwachungssystem nach Anspruch 1, das ferner eine Verteilungseinrichtung (49) aufweist, die dazu eingerichtet ist, die Überwachungs-Ausgänge gemäß durch die Konfigurationseinrichtung erzeugten Anweisungen an eine Vielzahl von empfangenden Stationen zu verteilen.

3. Überwachungssystem nach Anspruch 1 oder Anspruch 2, bei dem die Speichereinrichtung mit einer Eingangseinrichtung zum Empfangen von Daten von dem Netzwerk verbunden ist, die sich auf die Architektur des Netzwerks beziehen.

4. Überwachungssystem nach einem vorhergehenden Anspruch, bei dem die Datenverarbeitungseinrichtung (44) eine Einrichtung zur Antwort auf Vorgänge aufweist, die durch die Netzwerkabschlüsse für die Erzeugung von Ausgängen aus den Daten gemeldet werden.

5. Überwachungssystem nach einem vorhergehenden Anspruch, bei dem die Konfigurationseinrichtung (45) Autorisierungsdaten zur Speicherung (42) in der Daten-Speichereinrichtung (3) erzeugt und die Datenverarbeitungseinrichtung durch die Autorisierungsdaten (42) so gesteuert wird, dass die Erzeugung von Daten auf solche Daten beschränkt wird, die für autorisierte Ausgänge erforderlich sind.

6. Überwachungssystem nach einem vorhergehenden Anspruch, bei dem die Konfigurationseinrichtung (45) eine Anweisungs-Erzeugungseinrichtung (28) umfasst, die dazu eingerichtet ist, Anweisungen zu erzeugen, die an die Netzwerkabschlüsse zur Durchführung von Datensammel-Operationen zu übermitteln sind.

7. Überwachungssystem nach Anspruch 6, bei dem die Anweisungs-Erzeugungseinrichtung (28) so ausgestaltet ist, dass sie Befehle erzeugen kann, die ein erstes Netzwerk-Element veranlassen, ein Signal zur Übermittlung an ein zweites Netzwerk-Element zu erzeugen, sowie das zweite Netzwerk-Element, den Zeitpunkt, an dem das Signal empfangen wird, an den Server zu melden.

8. Überwachungssystem nach Anspruch 6, bei dem die Anweisungs-Erzeugungseinrichtung (28) so ausgestaltet ist, dass sie Befehle erzeugen kann, die ein erstes Netzwerk-Element veranlassen, das zweite Netzwerk-Element zu veranlassen, ein Rücksignal zu übermitteln, worauf dann das erste Element den Zeitpunkt des Empfangs der Antwort an den Server meldet.

9. Überwachungssystem nach einem vorhergehenden Anspruch, bei dem der Datenspeicher (3) eine Einrichtung, die dazu eingerichtet ist, User-Installationsdaten (41), Netzwerkdaten (40) und User-Identifikations- und -Autorisierungsdaten (42) beizubehalten, sowie eine Verwaltungseinrichtung (21) aufweist, die dazu eingerichtet ist, die Daten in dem Datenspeicher (3) beizubehalten.

10. Überwachungssystem nach Anspruch 9, bei dem die Verwaltungseinrichtung (21) eine Einrichtung ist, die dazu eingerichtet ist, Verbindungen (10, 20) zwischen Usern (41), Netzwerkdaten (40) und User-Credentials (42) für die Steuerung der Konfiguration von Netzwerk-Überwachung, Datenverarbeitung und Daten-Verteilung zu identifizieren.

11. Verfahren zur Überwachung eines Telekommunikations-Netzwerks (2), das eine Vielzahl von Netzwerkabschlüssen (83, 93) untereinander verbindet, wobei das Verfahren die folgenden Schritte umfasst:
Konfigurieren einer Datenverarbeitungseinrichtung (44) zum Verarbeiten von Daten, die von den Netzwerkabschlüssen empfangen werden, um geforderte Ausgangs-Daten zu erzeugen, wobei der Konfigurierungsprozess gemäß gespeicherten Daten (40) gesteuert wird, die sich auf die Ausgestaltung des Netzwerks und der Netzwerkabschlüsse beziehen, von denen Daten zu sammeln sind, um einen geforderten Ausgang zu erzeugen,
Empfangen von Daten von den Netzwerkabschlüssen als Antwort auf die Anweisungen
und
Verteilen der geforderten Ausgangsdaten,
**dadurch gekennzeichnet, dass** der Konfigurierungsprozess die Netzwerkabschlüsse (83, 93) so steuert, dass die erforderlichen Daten gesammelt werden durch Erzeugen von Anweisungen und Übermitteln der so erzeugten Anweisungen an diejenigen Netzwerkabschlüsse, die als für die Lieferung der Daten zur Erzeugung eines geforderten Ausgangs erforderlich identifiziert werden.

12. Verfahren nach Anspruch 11, bei dem von einem gegebenen Messpunkt (83) gesammelte individuelle Exemplare von Daten zur Erfüllung von Anforderungen verwendet werden, die durch mehr als eine Empfangsstation (8, 9) erfolgen.

13. Verfahren nach Anspruch 11 oder 12, bei dem der Speicher (40) von Netzwerkdaten Daten von dem Netzwerk (2) empfängt, die sich auf die Architektur des Netzwerks beziehen.

14. Verfahren nach Anspruch 13, bei dem die Ausgänge als Antwort auf Vorgänge von den Netzwerkabschlüssen (83, 93) erzeugt werden.

15. Verfahren nach Anspruch 11, Anspruch 12, Anspruch 13 oder Anspruch 14, bei dem die Lieferung von Daten an die Netzwerkabschlüsse (8, 9) gemäß einem Speicher (42) von Autorisierungsdaten so gesteuert wird, dass die Lieferung von Daten an die Netzwerkabschlüsse auf solche Daten beschränkt wird, die zur Erzeugung autorisierter Ausgänge erforderlich sind.

16. Verfahren nach Anspruch 11, Anspruch 12, Anspruch 13, Anspruch 14 oder Anspruch 15, bei dem der Konfigurierungsprozess die Erzeugung von Anweisungen beinhaltet, die an die Netzwerkabschlüsse (83, 93) zu übermitteln sind, damit Operationen zur Datensammlung durchgeführt werden.

17. Verfahren nach Anspruch 16, bei dem Befehle erzeugt werden, um ein erstes Netzwerk-Element (8) zu veranlassen, ein Signal zur Übermittlung an ein zweites Netzwerk-Element (9) zu erzeugen, sowie das zweite Netzwerk-Element, den Zeitpunkt, an dem das Signal empfangen wird, an den Server der Datenverarbeitungseinrichtung (44) zu melden.

18. Verfahren nach Anspruch 16, bei dem Befehle erzeugt werden, um ein erstes Netzwerk-Element (8) zu veranlassen, ein zweites Netzwerk-Element (9) zu veranlassen, ein Rücksignal zu übermitteln, worauf dann das erste Element den Zeitpunkt des Empfangs der Antwort meldet.

19. Verfahren nach einem der Ansprüche 11 bis 18, bei dem unter der Steuerung einer Administrations-Funktion (21) User-Installationsdaten, Netzwerkdaten und User-Identifikations- und -Autorisierungsdaten gespeichert und beibehalten werden.

20. Verfahren nach Anspruch 19, bei dem die Administrations-Funktion (21) Verbindungen zwischen Usern, Netzwerkdaten und User-Credentials für die Steuerung der Konfiguration von Netzwerk-Überwachung, Datenverarbeitung und Daten-Verteilung identifiziert.

## Revendications

1. Système de surveillance pour un réseau de télécommunication interconnectant une pluralité de terminaisons de réseau, le système de surveillance comprenant un serveur (4) présentant :
un moyen de récupération de données (43) pour recevoir des données en provenance des terminaisons de réseau ;
un moyen de traitement de données (44) pour traiter les données reçues en provenance des terminaisons de réseau en vue de générer un résultat ;
un moyen de stockage de données (3, 40) apte à stocker des données connexes à l'agencement du réseau et aux terminaisons de réseau ; et
**caractérisé par** un moyen de configuration (45) apte à identifier, à partir du magasin de stockage de données de réseau (3), les terminaisons de réseau au niveau desquelles une collecte de données est nécessaire en vue de générer un résultat requis ;
le moyen de configuration étant apte à commander au moyen de récupération de données (43) et au moyen de traitement de données (45) de mettre en oeuvre la collecte des données requises en commandant aux terminaisons de réseau (83, 93) de collecter les données requises en générant des instructions et en transmettant les instructions ainsi générées à ces terminaisons de réseau identifiées comme nécessaires pour fournir les données en vue de générer un résultat requis.

2. Système de surveillance selon la revendication 1, comprenant en outre un moyen de diffusion (49) apte à distribuer les résultats de surveillance à une pluralité de stations de réception selon des instructions générées par le moyen de configuration.

3. Système de surveillance selon la revendication 1 ou 2, dans lequel le moyen de stockage est associé à un moyen d'entrée en vue de recevoir des données provenant du réseau, lesquelles sont connexes à l'architecture du réseau.

4. Système de surveillance selon l'une quelconque des revendications précédentes, dans lequel le moyen de traitement de données (44) comprend un moyen pour répondre à des événements signalés par les terminaisons de réseau en vue de la génération de résultats à partir des données.

5. Système de surveillance selon l'une quelconque des revendications précédentes, dans lequel le moyen de configuration (45) génère des données d'autorisation à des fins de stockage (42) dans le moyen de stockage de données (3), et le moyen de traitement de données est commandé par les données d'autorisation (42) de sorte que la génération de données est limitée à celles requises pour des résultats autorisés.

6. Système de surveillance selon l'une quelconque des revendications précédentes, dans lequel le moyen de configuration (45) comprend un moyen de génération d'instructions (28) apte à générer des instructions devant être transmises aux terminaisons de réseau en vue de mettre en oeuvre des opérations de collecte de données.

7. Système de surveillance selon la revendication 6, dans lequel le moyen de génération d'instructions (28) est agencé de manière à générer des commandes destinées à amener un premier élément de réseau à générer un signal en vue d'une transmission à un second élément de réseau, et à amener le second élément de réseau à signaler au serveur l'instant de réception du signal.

8. Système de surveillance selon la revendication 6, dans lequel le moyen de génération d'instructions (28) est agencé de manière à générer des commandes destinées à amener un premier élément de réseau à amener le second élément de réseau à transmettre un signal de retour, le premier élément signalant ensuite au serveur l'instant de réception de la réponse.

9. Système de surveillance selon l'une quelconque des revendications précédentes, dans lequel le magasin de stockage de données (3) présente un moyen apte à maintenir des données d'installation d'utilisateur (41), des données de réseau (40) et des données d'autorisation et d'identification d'utilisateur (42), et un moyen d'administration (21) apte à maintenir les données dans le magasin de stockage de données (3).

10. Système de surveillance selon la revendication 9, dans lequel le moyen d'administration (21) est un moyen apte à identifier des associations (10, 20) entre des utilisateurs (41), des données de réseau (40) et des justificatifs d'identité d'utilisateur (42), pour la commande de la configuration de la surveillance de réseau, du traitement de données et de la diffusion de données.

11. Procédé de surveillance d'un réseau de télécommunication (2) interconnectant une pluralité de terminaisons de réseau (83, 93), le procédé comprenant les étapes ci-dessous consistant à :
configurer un moyen de traitement de données (44) en vue de traiter des données reçues en provenance des terminaisons de réseau pour générer des données de résultat requis, le processus de configuration étant commandé selon des données stockées (40) connexes à l'agencement du réseau et aux terminaisons de réseau à partir desquelles des données doivent être collectées en vue de générer un résultat requis ;
recevoir des données en provenance des terminaisons de réseau en réponse auxdites instructions ; et
diffuser les données de résultat requis ;
**caractérisé en ce que** le processus de configuration commande aux terminaisons de réseau (83, 93) de collecter les données requises en générant des instructions et en transmettant les instructions ainsi générées à ces terminaisons de réseau identifiées comme nécessaires pour fournir les données en vue de générer un résultat requis.

12. Procédé selon la revendication 11, dans lequel des instances individuelles de données collectées à partir d'un point de mesure donné (83) sont utilisées pour l'exécution de demandes émises par plus d'une station de réception (8, 9).

13. Procédé selon la revendication 11 ou 12, dans lequel le magasin de stockage (40) de données de réseau reçoit des données en provenance du réseau (2), connexes à l'architecture du réseau.

14. Procédé selon la revendication 13, dans lequel les résultats sont générés en réponse à des événements à partir des terminaisons de réseau (83, 93).

15. Procédé selon la revendication 11, 12, 13 ou 14, dans lequel la fourniture de données aux terminaisons de réseau (8, 9) est commandée selon un magasin de stockage (42) de données d'autorisation, de manière à limiter la fourniture de données aux terminaisons de réseau à celles requises en vue de générer des résultats autorisés.

16. Procédé selon la revendication 11, 12, 13, 14 ou 15, dans lequel le processus de configuration inclut la génération d'instructions devant être transmises aux terminaisons de réseau (83, 93) en vue de mettre en oeuvre des opérations de collecte de données.

17. Procédé selon la revendication 16, dans lequel des commandes sont générées en vue d'amener un premier élément de réseau (8) à générer un signal en vue d'une transmission à un second élément de réseau (9), et en vue d'amener le second élément de réseau à signaler, au serveur du moyen de traitement de données (44), l'instant de réception du signal.

18. Procédé selon la revendication 16, dans lequel des commandes sont générées en vue d'amener un premier élément de réseau (8) à amener un second élément de réseau (9) à transmettre un signal de retour, le premier élément signalant ensuite l'instant de réception de la réponse.

19. Procédé selon l'une quelconque des revendications 11 à 18, dans lequel des données d'installation d'utilisateur, des données de réseau et des données d'autorisation et d'identification d'utilisateur sont stockées et maintenues sous la commande d'une fonction d'administration (21).

20. Procédé selon la revendication 19, dans lequel la fonction d'administration (21) identifie des associations entre des utilisateurs, des données de réseau et des justificatifs d'identité d'utilisateur, pour la commande de la configuration de la surveillance de réseau, du traitement de données et de la diffusion de données.
